# EUROPEAN PATENT APPLICATION

(11) **EP 3 447 736 A2**
(43) Date of publication of application: **27.02.2019**
(21) Application number: 17786238.0
(22) Date of filing: 21.04.2017
(51) Int. Cl.: G06T 19/00, G06T 7/90

(54) **METHOD FOR INFLUENCING VIRTUAL AUGMENTED-REALITY OBJECTS**

(30) Priority: 23.04.2016 RU 2016115817
(71) Applicant: Devar Entertainment Limited, Nicosia, P.C. 1075 (CY)
(72) Inventor: AVERYANOV, Vitaly Vitalyevich, Tula 300005 (RU); KOMISSAROV, Andrey Valeryevich, Tula 300024 (RU)
(74) Representative: Schmidt, Steffen J.
(86) International application number: PCT/RU2017/050027
(87) International publication number: WO 2017/184033

(57) **Abstract**

The present invention relates to methods intended for interacting with virtual objects, involving disposing an uncolored flat image of an augmented-reality object within the field of vision of a video camera of a device for creating and viewing virtual augmented-reality objects, coloring the uncolored image of the augmented-reality object, identifying colors on the images received from the video camera of the device for creating and viewing augmented-reality objects, and coloring the augmented-reality object in accordance with the colors identified on the colored image received from the video camera of the device for creating and viewing augmented reality, and may be used, for instance, in teaching means. In accordance with the invention, before beginning to color an image of an augmented-reality object, a database is formed of various sequences of actions for augmented-reality objects, and a correlation is preestablished between the color of a colored image and a variant for the actions of the augmented-reality objects; depending on the color of the images received from the video camera of the device for creating and viewing augmented-reality objects, a certain action is activated for the augmented-reality object, from the database of various sequences of actions for augmented-reality objects, in accordance with the predetermined correlation. The achieved technical result consists in allowing for controlling various sequences of actions of an augmented-reality object using the range of colors of a colored flat image of an augmented-reality object.

## Description

### Technical Field to which the invention pertains.

The present invention represents a method for influencing virtual objects, wherein an unpainted flat image of an object of augmented reality is placed in the field of view of a video camera of a device for creating and viewing virtual objects of augmented reality, then painting the unpainted image of the object of augmented reality, determining colours from the image obtained from the video camera of the device for creating and viewing objects augmented reality, colouring the object of augmented reality in accordance with the colours determined from the painted image obtained from the camera of the device for creating and viewing augmented reality. Said method can be used on, for example, in training facilities.

The following terms are used in this description:
**Virtual object** - created by technical means of object passed to man through his senses: vision, hearing and others.
**Augmented Reality** - perceived mixed reality created by using the "augmented" by the computer elements perceived reality (where virtual objects are mounted in the perceptual field).
**Device adapted to create and view objects of augmented reality** - any computing device having a complete display and a video camera, which can transmit the display image from the camera in real time and display additional virtual image. A typical representative of such a device: smartphone, tablet computer, a computer with a headset in the form of points of augmented reality, such as Google Glass etc.
**Smartphone** (eng. smartphone - smart phone) - cell phone, complete with the functionality of a Pocket PC.

### BACKGROUND ART

Currently, an increasing number of people use various electronic devices and interacting with virtual objects. This happens not only in games but also in the learning process, as well as, for example, when a remote trade of goods, a buyer decides to purchase using a virtual model of the goods. In this case, the most promising direction of development is the creation of augmented reality - that is, the combination of a virtual or augmented reality virtual objects along with a real image obtained in real time from the video camera of the device shown on the display of computer device or a smartphone.

In addition to simply observing the objects of augmented reality, there is a need to interact with them, that is, using various means to send control signals, which lead to the object of the augmented reality reacting to the effect.

There is a known method of influencing the virtual augmented reality objects, wherein the object of augmented reality is painted in colours corresponding to the colours of a painted plane image corresponding to said object of augmented reality. For example, a student takes a sheet of paper with an image of an animal, paints it in colour. And then watching coloured drawing through a smartphone or augmented reality glasses, while he sees a three-dimensional image of the same animal, painted in exactly the colours that he used to paint the image.

There is a known method of influencing virtual objects of augmented reality, wherein:
- An unpainted image of an object of augmented reality is located in the field of view of a video camera of device for creating and viewing virtual objects of augmented reality,
- the unpainted flat image of the object of augmented reality is painted,
- colours used to colour the flat image of the object of augmented reality are determined by means of the device for creating and viewing objects of augmented reality from images taken from video camera of the device for creating and viewing objects of augmented reality,
- the object of augmented reality is coloured in the colours corresponding to the colours determined from the painted image received from the camera of the device means for creating and viewing objects of augmented reality.

This state of the art disclosed in the publication of 10.03.2015 in the article "Augmented reality for the conversion of colourings in a three-dimensional experience," is available at: https://i-look.net/programs/augmented-reality-for-making-colouring-3d-experience.html

This method is the closest in technical essence and attainable technical result and selected as a prototype of the invention.

The disadvantage of this prototype is that it is impossible to control the actions or movements of the object of augmented reality, depending on the colour in which the corresponding flat image of this object is painted. Indeed, for any variant of painting an object of augmented reality identical and differ only in their colour, action or movement of such an object does not change.

### Description of the Invention.

Based on this original observation, the present invention mainly aims to provide a method of influencing virtual objects of augmented reality, which allows to address at least one of the drawbacks mentioned above, namely, to provide a capability to control various sequences of actions of the object of augmented reality using colours used to colour flat image of said object of augmented reality, which is the technical problem addressed.

In order to achieve this goal, the following steps are performed:
- forming a database of various sequences of actions objects augmented reality prior to painting the picture of the object of augmented reality,
- establishing beforehand a correlation between the colour of the painted picture and variant of actions of the objects of augmented reality,
- depending on the colours of the image obtained from the video camera of the device for creating and viewing objects of augmented reality, activate a certain action of the object of augmented reality from database of sequences of actions of the objects of augmented reality according to the established correlation.

Due to these advantageous features it is possible to control the augmented reality objects by colouring their corresponding flat image. Depending on the colour, the object will perform the actions corresponding to the specified colour.

There is an embodiment of the invention wherein the selection of the sequences of actions of the augmented reality objects is carried out on the basis of the prevailing colour on the images obtained from the video camera of the device to create and view the augmented reality objects

Thanks to this favorable feature there is a capability appears to specify one of the variants of the algorithm, using which it is possible to solve the problem of determining which course of action of the augmented reality object to activate, if the flat image is painted in different colours. In this embodiment, the object of augmented reality will always act in accordance with colour prevailing in the flat image.

There is also an embodiment of the invention in which the colourable flat image is further divided into fragments, each fragment puts in correlation with an element of an object of augmented reality, prior to starting colouring a fragment of the flat image of the object of augmented reality, forming a database of various sequences of actions of elements of the objects of augmented reality and establishing correspondence between the colour of the coloured fragment of the image and one of sequences of actions of elements of the objects of augmented reality and, depending on the colour of the fragments obtained from the camera of the device to create and view objects augmented reality, activate one or another action of the element of the object of augmented reality different from the base of sequences of actions of elements of augmented reality objects, according to the correspondence established for the fragments.

Thanks to these advantageous features there is a possible to specify an alternate version of the algorithm by which it will be possible to determine a course of action for the augmented reality object to activate, if the image is painted in different colours. In this embodiment, the combined action of an object of augmented reality is shall be a superposition of the actions of individual elements of augmented reality objects.

There is another embodiment of the invention in which the colour transformation of the flat image of the augmented reality object is additionally applied to a colour scheme having three numerical components: colour tone, saturation and brightness.

Thanks to this advantageous feature, it becomes possible to more clearly match the actions of the augmented reality object depending on the colour tone, saturation and brightness.

There is also an embodiment of the invention in which the saturation parameter of the fragments of the painted flat image is additionally determined and signals provided to the user that the fragment is not coloured in a situation where the saturation of the fragments of the painted flat image is less than a specified value.

Thanks to this advantageous feature, it becomes possible to indicate to the user that he forgot to paint some fragment of the flat image. There is among other things an embodiment of the invention in which algorithms for improving the quality of a painted flat image (automatic white balance, automatic tone balance) are used.

Thanks to this advantageous characteristic, it is possible to make the image of the augmented reality object brighter and more saturated than the real colours on the painted image.

### Brief Description of the Drawings.

Other features and advantages of the present invention clearly follow from the description given below for illustration and not being limiting, with reference to the accompanying drawings in which:
- Figure 1 shows a schematic diagram of an apparatus for influencing virtual augmented reality objects according to the invention,
- Figure 2 schematically shows the steps of a method for influencing virtual objects of augmented reality according to the invention,
- Figure 3 schematically depicts yet another embodiment of the steps of the method for influencing virtual objects of the augmented reality according to the invention.

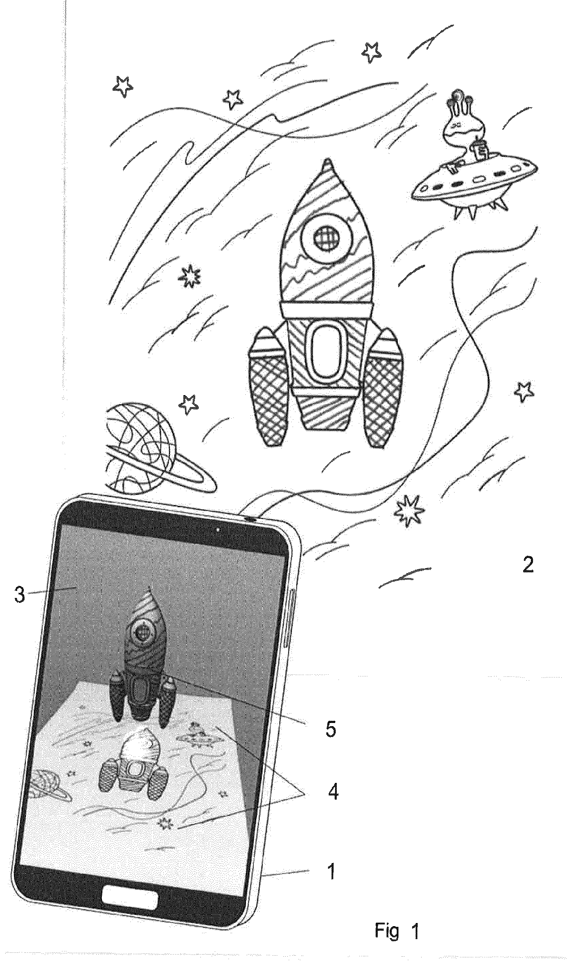

According to Figure 1, the device for influencing the virtual reality objects of augmented reality is a smartphone 1 whose video camera is aimed at the coloured image 2 and on the display 3 of which the painted image, position 4 is shown. According to the colour of the painted image, the display shows the virtual object of augmented reality 5, corresponding to image 2, painted in the same colours.

### Implementation of the invention.

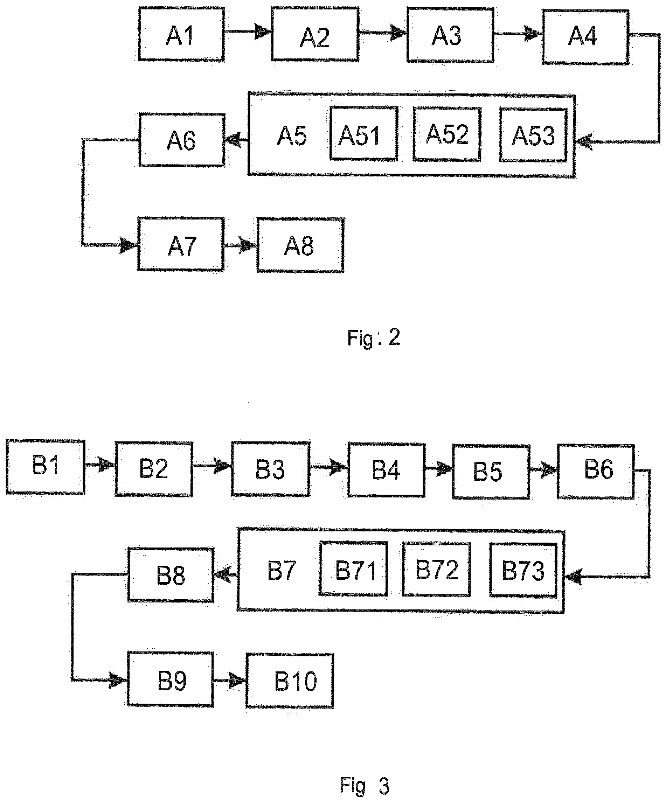

The method for influencing virtual objects of augmented reality works as follows. The most exhaustive example of the implementation of the invention is provided, bearing in mind that this example does not limit the application of the invention. According to Figure 2:

### Example 1.

**Step A1.** Before the beginning of colouring the image of the object of the augmented reality, forming a database of various sequences of actions of objects of the augmented reality.
**Step A2.** In advance, a correlation is established between the colours of the painted image and variants of the actions of the object of the augmented reality.
**Step A3.** An uncoloured flat image of the object of augmented reality is placed in the field of view of the video camera of device to create and view virtual objects augmented reality.
**Step A4.** The flat image of the object of augmented reality is coloured by means of the device to create and view objects of augmented reality
**Step A5.** Colours of the images obtained from the video camera of the device to create and view objects of augmented reality are determined by the means of the device.
   **Step A 51.** Additionally, conversion of colours of the flat image of the object of augmented reality image is performed to the colour scheme having a numerical three components: hue, saturation and brightness.
   **Step A 52.** Additionally, a saturation parameter is determined fir fragments of the painted flat image, and user is notified that the fragment is not coloured in a situation where the saturation of the fragments of the flat image is below a specified parameter.
   **Step A 53.** Algorithms are used to improve the quality of the painted flat image. For this purpose can be used a linear correction of brightness and contrast, power (gamma) correction, and whether the logarithmic correction, as well as algorithms that aligns the image illumination, while maintaining local contrast in poorly lit areas and bright, and automatic white balance, auto tone and balance, or any other algorithm to improve the quality of the painted flat image.
**Step A6.** Colouring of the object of augmented reality is performed in accordance with the colours defined in the painted image from the video camera on the device to create and view augmented reality.
**Step A7.** Depending on the colours of the images obtained from the camera of the device for creating and viewing the augmented reality objects, an action is activated on the object of augmented reality selected from the database of sequences of actions augmented reality objects, according to the established correspondence.
**Step A8.** The choice of the sequence of actions of the augmented reality objects is carried out on the basis of the dominant colour in the images obtained from the video camera device for creating and viewing the augmented reality objects.

### Example 2.

**Step B1.** The flat image is split into fragments.
**Step B2.** Each fragment is put in correlation with an element of the object of augmented reality.
**Step B3.** Before starting colourization of the fragment of the flat image of the object of augmented reality forming database of various workflows elements augmented reality objects.
**Step B4.** The correspondence between the colours of the fragments of the painted image and actions of elements of the object of augmented reality.
**Step B5.** The unpainted image of the object of augmented reality is placed in the field of view of the video camera of device for creating and viewing virtual objects augmented reality.
**Step B6.** Fragments of the unpainted flat image of the object of augmented reality are painted.
**Step B7.** The colour of the images of the fragments are determined from the images obtained from the video camera of the device for creating and viewing objects augmented reality.
   **Step B71.** Additionally, the colour transformation of the flat image of the fragments of the augmented reality object is converted into a colour scheme having three numerical components: colour tone, saturation and brightness.
   **Step B72.** Additionally, the saturation parameter of the fragments of the painted flat image is determined and the user is alerted that the fragment is not coloured in a situation where the saturation of the fragments of the painted flat image is below the specified parameter.
**Step B73.** Using algorithms to improve the quality of the painted flat image (auto white balance, autotone).
**Step B8.** The colouring of the elements of the augmented reality object is made in accordance with the colours defined on the fragments of the painted image obtained from the camera of the device to create and view the augmented reality.
**Step B9.** Depending on the colour on the fragments of images obtained from the camera of the device to create and view objects augmented reality, certain action of the element of the augmented reality object is activated from the database of different sequences of actions of elements of the augmented reality objects, according to the established correspondence.
**Step B10.** The selection from the sequences of actions of the elements of the augmented reality objects is carried out on the basis of the prevailing colour of the fragments of images obtained from the camera of the device for creating and viewing objects of augmented reality.

Obviously, the estimation of the colour in which this or that fragment of the image is coloured implies a colour comparison rather than a point comparison, but an approximate evaluation of the correspondence of the detected colour to a definite fixed set.

The critical moment here is the choice of the colour model in which the comparison will be made. Most of the images in modern computing devices are stored in the RGB model - where each colour is decomposed into three components (red-blue-green) and in this form is recorded. But such a model does not look convenient enough in our situation. The most attractive are the models HLS and HSB, which store the colour also in the form of three numerical components, but these components describe the colour tone, saturation and brightness.

In this form, the colour data is optimally suited for analysis - in colour tones (in fact, one can understand the colour tone as a point on the rainbow) you can determine the colour of the marker or pencil used for colouring, saturation allows for a fixed threshold (for example, 0.5) allows you to determine whether the area is painted, or it can be a feature of lighting (paper with room lighting often 25 gleams red).

The brightness component can be used in various ways - and to distinguish light blue from dark blue, and to cut off "uninteresting" colours for us - such as white and black (the original colours of an unpainted flat image).

It is also advisable to avoid mistakes in the estimation of illumination by means of white balance algorithms, with a spot (at the brightest point) or multiple (based on, for example, the edges of a scanned sheet of paper) by measurement.

Multiple measurement in an obvious way will give the best quality, because the scanned sheet of paper is not always illuminated evenly. Optimum the solution can look like a weighted metering across the entire scanned area, then building an irradiance map, clearing it of noise and compensating it, to get the image of the scanned page closest to reality.

In all the examples for placing the augmented reality objects on real objects (for example, on a table), the following operations are also performed:
1. Identify the markers of real three-dimensional space from the images obtained from the device's video camera to create and view the augmented reality. In general, a marker can be any figure or object. But in practice, we are limited to allowing the webcam 10 (phone), colour rendering, lighting and computing power of the equipment, since everything happens in real time, and therefore must be processed quickly, and therefore usually select a black and white marker of simple form.
2. Form a physical base coordinate system tied to the spatial position of the markers of a real three-dimensional space.
3. Specify coordinates of the three-dimensional virtual objects of the augmented reality in the base coordinate system.
4. Determine the coordinates of the device to create and view the augmented reality relative to the base coordinate system by means of image analysis from the camera of the device.

The sequence of steps is exemplary and allows one to rearrange, subtract, add, or perform some operations simultaneously without losing the ability to interact with virtual objects.

### Industrial Applicability.

The proposed method of influencing virtual objects of augmented reality can be implemented by a specialist in practice and, when implemented, ensures the realization of the claimed assignment, which allows 30 to conclude that the criterion of "industrial applicability" for the invention is met.

In accordance with the present invention, a prototype of a device implementing the proposed method is manufactured. Testing the prototype showed that it provides the ability to:
- colouring the object of augmented reality or an element of such an object into the colour of a flat image,
- determining the colours of the painted flat image,
- defining in the database of the sequences of actions of the object of the augmented reality corresponding to a certain colour,
- executing the specified sequence of actions corresponding to a particular colour by the object of augmented reality.

**Implementation Example 1.** A virtual dragon, created as an augmented reality object, dances in a stylized way, as it could be done by a little girl. And when painted predominantly in blue, depicts a fighting boy.

**Implementation Example 2.** Created as an object of augmented reality, a virtual fictitious animal when coloured lip colour on a flat image in a bright red colour sends an air kiss.

**Implementation Example 3.** See Figure 1. The virtual rocket created as object 15 of the augmented reality takes off or explodes depending on the painted colour.

Thus, in the present invention, the stated object is achieved: to provide the ability to control various sequences of actions of the augmented reality object with the help of the colour gamut of the painted flat image of the augmented reality object.

## Claims

1. A computer device (1) for creating and browsing virtual objects of augmented reality, including at least:
a camera adapted to capture a flat image (2), where a flat image is a contour pattern for coloring,
display (3),
said computer device is adapted to:
recognize an image of a corresponding virtual object (5) on a flat image (2),
define colors in which the flat image (2) is painted,
output to the display (3) an image of the corresponding virtual object (5), colored in accordance with how the corresponding flat image (2) is colored,
activate an action and / or a sequence of actions of the virtual object (5) from a virtual objects action database corresponding to a particular color or colors, where the virtual objects action database is a database that includes a set of virtual object action sequences, where each sequence corresponds to a color or colors.

2. A computer device (1) according to claim 1, wherein a certain color includes a color scheme including three numerical components: color tone, saturation and brightness.

3. A computer device (1) according to item 1, wherein the activating of the virtual object (5) is performed on the basis of a predominant color of the flat image used to color the flat image (2).

4. A computer device (1) according to claim 1, which is further adapted to:
split the flat image into fragments,
put in correspondence an element of a virtual object to each fragment of the flat image,
determine a color of each fragment,
activate an action of the virtual object based on the correspondence between the color of the fragment of the flat image and the variant action of elements of the augmented reality objects in said database of actions of the virtual objects of augmented reality.

5. A computer device (1) according to claim 4, which is further adapted to determine color saturation of the fragments of the flat image, and
to signal to the user that the fragment is not colored, if the fragment saturation is less than the specified parameter.

6. A computer device (1) according to claim 4, which is further adapted to use algorithms, including automatic white balance and automatic tone balance to improve coloring quality of the virtual reality object.

7. A method for creating and browsing virtual objects of augmented reality, including the steps of:
capturing a flat image (2) by a camera of a computer device, where the flat image is a contour drawing for coloring,
recognizing an image corresponding to a virtual object (5) on the flat image (2),
determining the colors in which the flat image is painted (2),
outputting to the display (3) the corresponding virtual object (5), colored in accordance with how the corresponding flat image (2) is colored,
activating the actions and / or sequence of actions of the virtual object (5) from the virtual objects action database corresponding to a specific color or colors, where the virtual objects action database is a database that includes a set of virtual object action sequences, where each sequence corresponds to a color or colors.

8. The method of claim 7, wherein a particular color includes a color scheme comprising three numerical components: hue, saturation, and brightness.

9. The method of claim 7, where the activation of the virtual object (5) is effected on the basis of the predominant color of the flat image used in coloring the flat image (2).

10. The method of claim 7, further including:
splitting the flat image into fragments,
putting each fragment into correspondence with an element of the virtual object,
determining the color of each fragment,
activating the action of the virtual object based on the correspondence between the color of the fragment of the flat image and a variant of the actions of the elements of the augmented reality objects in said database of actions of the virtual objects of the augmented reality.

11. The method of claim 10, further including:
determining color saturation of fragments of the flat image (2), and
signaling to the user that the fragment is not colored, if the saturation of the fragment is less than a specified threshold.

12. The method of claim 10, further including:
using algorithms, including automatic white balance, and automatic tone balance to improve quality of coloring the virtual object of augmented reality.
